# FASCICULE DE BREVET EUROPEEN

(11) **EP 1 403 120 B1**
(45) Date de publication et mention de la délivrance du brevet: **29.11.2006**
(21) Numéro de dépôt: 03292349.2
(22) Date de dépôt: 25.09.2003
(51) Int. Cl.: B60K 20/06

(54) **Système de commande de commutation d'une fonction à deux états fonctionnant dans deux plans differents**
Schaltsteuervorrichtung für eine zweistellige Funktion in zwei verschiedenen Ebenen
Control command with a two-state function actuated in two different planes

(30) Priorité: 27.09.2002 FR 0211981
(43) Date de publication de la demande: 31.03.2004
(73) Titulaire: SC2N, 78180 Montigny-le-Bretonneux (FR)
(72) Inventeur: Hallet, Michel, 14320 Clinchamps-Sur-Orne (FR); Tissot, Jean-Marc, 01250 Meyriat (FR); Greal, Patrick, 14370 Argences (FR)
(74) Mandataire: Texier, Christian

(56) Documents cités:
- EP-A- 0 702 285
- FR-A- 1 197 404
- FR-A- 2 724 347

## Description

L'invention concerne les systèmes de commande de boîte de vitesse impulsionelle situés sous un volant d'un véhicule automobile en haut de colonne de direction.

Actuellement, les systèmes de commande de boîte de vitesse impulsionnelle ou séquentielle comportent deux éléments de commande situés de part et d'autre du volant, sous le volant, dans le haut de la colonne de direction. Chacun des éléments de commande permet de changer les rapports en tirant simplement vers le volant ledit élément de commande de manière à changer de rapport selon un sens prédéterminé (montée ou descente). Conventionnellement, le fait de tirer sur l'élément de commande situé à main droite permet de monter les rapports de la boîte de vitesse alors que tirer sur l'élément de commande situé à main gauche permet de descendre lesdits rapports de la boîte de vitesse.

On connaît également d'après le document FR 2 724 347 un dispositif de commande de vitesses comprenant un levier sélecteur de vitesse. Ce levier comporte une partie de préhension qui se déplace soit vers la main droite, soit vers la main gauche du conducteur et, bascule dans une direction perpendiculaire à la surface du volant pour provoquer, respectivement, une progression séquentielle des vitesses ou le rétrogradage des vitesses.

Une telle disposition des systèmes de commande de la boîte de vitesse impulsionnelle nécessite de la part de l'utilisateur un certain apprentissage, car l'utilisation peut se révéler relativement peu évidente. De plus, dans des situations délicates, l'utilisateur peut être amené à mal utiliser les palettes ou à les utiliser en même temps ce qui a pour conséquence une incertitude certaine qui peut être dangereuse à l'utilisation : un changement de rapport erroné peut conduire à l'accident.

D'autre part, le document FR 1 197 404, l'état de la technique le plus proche, propose un dispositif de commande pour boite de vitesses de véhicule, relié à la colonne de direction, dans lequel le passage de vitesses est assuré par des boutons poussoirs séparés et prévus, entre autres, pour la montée et la descente des vitesses.

Un but de l'invention est de fournir un système de commande de boîte de vitesse impulsionnelle plus intuitif à utiliser et nécessitant un apprentissage moindre de la part de l'utilisateur.
A cet effet, on prévoit, selon l'invention, un système de commande de commutation pour un véhicule apte à réaliser une fonction présentant deux états, comprenant deux éléments de commande agencés de sorte que chaque élément de commande met en oeuvre la fonction selon un de ces états respectivement, le système de commande de commutation comportant en outre un mécanisme unique de commutation apte à réaliser la fonction, les deux éléments de commande étant liés à ce mécanisme et s'étendant sensiblement dans une seule et même région de l'espace, l'un parmi les deux éléments de commande étant apte à se déplacer selon un premier plan de l'espace l'autre parmi les deux éléments de commande selon un deuxième plan de l'espace différent du premier plan.

Ainsi, le fait que les éléments de commande s'étendent dans une seule et même région de l'espace, comme revendiqué dans la revendication 1, permet à l'utilisateur d'y accéder à l'aide d'une seule main, l'obligeant à mettre en oeuvre en même temps un seul des deux organes de commande, augmentant ainsi la sécurité d'utilisation du système de commutation.

Avantageusement mais facultativement, le système de commande de commutation présente au moins l'une des caractéristiques suivantes :
- le deuxième plan de l'espace est sensiblement orthogonal au premier plan de l'espace ;
- les deux états de la fonction sont antagonistes ;
- le système de commande de commutation est situé au niveau d'un haut de colonne de direction ;
- les éléments de commande s'étendent dans une région de l'espace située sous un volant de direction ;
- le premier plan de l'espace est sensiblement orthogonal au plan de l'espace contenant le volant ;
- le système de commande de commutation pilote une boite de vitesse.

D'autres caractéristiques et avantages de l'invention apparaîtront lors de la description ci après d'un mode de réalisation. Aux dessins annexés :
- la figure 1 est une vue en trois dimensions d'un mode de réalisation de l'invention ;
- la figure 2 est une vue en trois dimensions selon un autre point de vue de mode de réalisation de la figure 1 montée sur le haut de colonne de direction sous le volant de direction ;

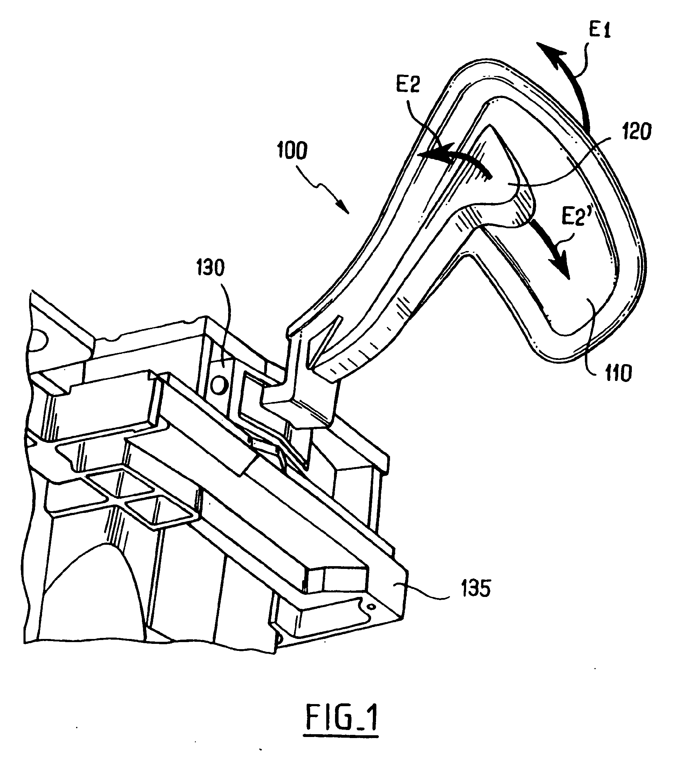

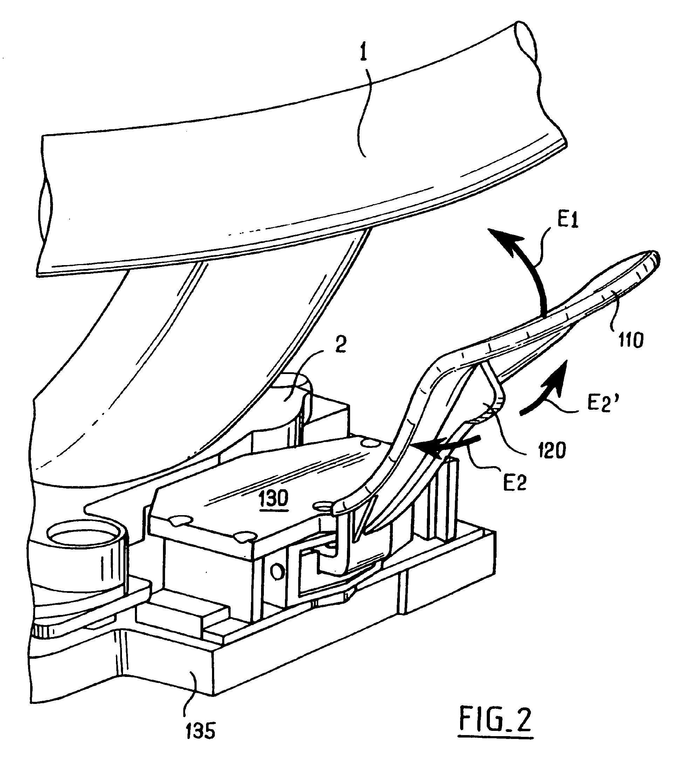

En référence aux figures 1 et 2, nous allons décrire un mode de réalisation de l'invention.

Un système de commande de commutation pour piloter une fonction présentant deux états comprend un premier élément de commande 110 apte à mettre en oeuvre la fonction selon un premier de ces deux états et un deuxième élément de commande 120 apte à mettre en oeuvre ladite fonction selon un deuxième de ces états. Les deux éléments de commande 110 et 120 sont ici des palettes reliées à un boîtier 130 contenant un mécanisme de commutation apte à réaliser ladite fonction. Le boîtier 130 est ici installé sur un plateau 135 qui peut être de préférence un plateau situé en haut d'une colonne de direction d'un véhicule automobile comme cela est illustré en figure 2, où le boîtier 130 est installé sous un volant 1 monté sur un support 2 en haut de la colonne de direction. Ainsi, un utilisateur ayant les mains sur le volant peut atteindre les deux organes de commande 110 et 120 à l'aide d'une seule main sans quitter le volant d'avec ladite main.

En fonctionnement, la palette 110 est apte à se déplacer selon un mouvement E1 par rapport au boîtier 130. De préférence, le mouvement E1 s'effectue selon un plan qui est sensiblement orthogonal à un plan du volant 1. De manière préférentielle, le mouvement de la palette 110 est un mouvement de rotation par rapport au boîtier 130 dans le plan précité précédemment et ce en direction du volant. A l'utilisation, l'utilisateur tire sur la palette 110 de manière à réaliser ledit mouvement E1.

La palette 120, située sous la palette 110, peut se déplacer dans un plan qui est sensiblement orthogonal au plan de déplacement de la palette 110. De manière préférentielle, la palette 120 effectue un mouvement de rotation par rapport au boitier 130 dont l'axe est sensiblement orthogonal à un axe de rotation du mouvement E1. La direction du mouvement de la palette 120 est de préférence dans le sens de la flèche E2, c'est-à-dire que l'utilisateur tire vers lui la palette 120, s'il manipule les éléments d'organe 110 et 120 de la main droite. Dans une variante de réalisation, la palette 120 peut être déplacée dans le sens de la flèche E2', c'est-à-dire que l'utilisateur pousse vers l'avant la palette 120 pour mettre en oeuvre l'état associé à la palette 120 de la fonction.

De manière préférentielle, dans le cas d'une commande d'une boîte de vitesse impulsionnelle, la palette 110 sert à monter les rapports de la boîte de vitesse alors que la palette 120 sert à les descendre. Une telle disposition est intuitive car la palette 110 se déplaçant vers le volant est assimilée par l'utilisateur à un déplacement vers le haut qui est facilement associable avec le fait de monter les rapports d'une boîte de vitesse, alors que de déplacer la palette 120 selon la direction et le sens indiqué par la flèche E2 est du point de vue de l'utilisateur un déplacement vers le bas aisément associable par ledit utilisateur au fait de descendre les rapports de vitesse. Comme dans le cadre d'une commande de boîte de vitesse impulsionnelle, les deux états de la fonction réalisée par les palettes 110 et 120 sont antagonistes et ne peuvent être mises en oeuvre de manière simultanée. La différenciation d'utilisation par deux mouvements bien distincts tels que décrits précédemment évite l'utilisation simultanée, ce qui augmente encore la sécurité d'utilisation de la boîte de vitesses.

Bien entendu, on peut apporter à la présente invention de nombreuses modifications sans sortir du cadre de celle-ci.

## Revendications

1. Système de commande de commutation (100 ; 200) pour un véhicule apte à réaliser une fonction présentant deux états, comprenant deux éléments de commande (110, 120 ; 210, 220) agencés de sorte que chaque élément de commande met en oeuvre la fonction selon un de ces états respectivement, **caractérisé en ce que** le système de commande de commutation comporte en outre un mécanisme unique de commutation (130, 230) apte à réaliser la fonction, les deux éléments de commande étant liés à ce mécanisme et s'étendant dans une seule et même région de l'espace, l'un (110) parmi les deux éléments de commande (110, 120) étant apte à se déplacer selon un premier plan de l'espace, l'autre (120) parmi les deux éléments de commande selon un deuxième plan de l'espace différent du premier.

2. Système selon la revendication 1, **caractérisé en ce que** le deuxième plan de l'espace est orthogonal au premier plan de l'espace.

3. Système selon l'une des revendications 1 à 2, **caractérisé en ce que** les deux états de la fonction sont antagonistes.

4. Système selon l'une des revendications 1 à 3, **caractérisé en ce que** le système de commande de commutation est situé au niveau d'un haut de colonne de direction.

5. Système selon l'une des revendications 1 à 4, **caractérisé en ce que** les éléments de commande s'étendent dans une région de l'espace située sous un volant de direction.

6. Système selon l'une des revendications 1 à 5, **caractérisé en ce que** le premier plan de l'espace est orthogonal à un plan contenant le volant 1.

7. Système selon l'une des revendications 1 à 6, **caractérisé en ce que** le système de commande de commutation pilote une boîte de vitesse.

## Claims

1. Switching control system (100, 200) for a vehicle designed to perform a two-state function, comprising two control elements (110, 120; 210, 220) arranged so that each control element applies the function according to these states respectively, **characterized in that** the switching control system also comprises a single switching mechanism (130, 230) designed to perform the function, the two control elements being linked to this mechanism and extending in one and the same region of space, one (110) of the two control elements (110, 120) being designed to move according to a first plane of the space, the other (120) of the two control elements according to a second plane of the space different from the first one.

2. System according to Claim 1, **characterized in that** the second plane of the space is orthogonal to the first plane of the space.

3. System according to one of Claims 1 and 2, **characterized in that** the two states of the function are opposing.

4. System according to one of Claims 1 to 3, **characterized in that** the switching control system is located at the top of a steering column.

5. System according to one of Claims 1 to 4, **characterized in that** the control elements extend in a region of the space located under a steering wheel.

6. System according to one of Claims 1 to 5, **characterized in that** the first plane of the space is orthogonal to a plane containing the steering wheel 1.

7. System according to one of Claims 1 to 6, **characterized in that** the switching control system controls a transmission.

## Patentansprüche

1. Schaltsteuervorrichtung (100,200) für ein Fahrzeug, die geeignet ist, eine Funktion mit zwei Zuständen umzusetzen und zwei Steuerelemente (110, 120; 210, 220) umfasst, die so angeordnet sind, dass jedes Steuerelement die Funktion jeweils gemäß einem dieser Zustände ausführt, **dadurch gekennzeichnet, dass** die Schaltsteuervorrichtung außerdem einen einzigen Schaltmechanismus umfasst (130, 230), der geeignet ist, die Funktion umzusetzen, wobei die beiden Steuerelemente mit diesem Mechanismus verbunden sind und sich in ein- und demselben Raumbereich erstrecken, wobei das eine (110) von den beiden Steuerelementen (110, 120) geeignet ist, sich entlang einer ersten Ebene des Raumes, und das andere (120) von den beiden Steuerelementen sich entlang einer zweiten, von der ersten verschiedenen Ebene des Raumes zu bewegen.

2. System gemäß Anspruch 1, **dadurch gekennzeichnet, dass** die zweite Ebene des Raumes orthogonal zur ersten Ebene des Raumes ist.

3. System gemäß einem der Ansprüche 1 bis 2, **dadurch gekennzeichnet, dass** die zwei Zustände der Funktion einander entgegenwirkend sind.

4. System gemäß einem der Ansprüche 1 bis 3, **dadurch gekennzeichnet, dass** die Schaltsteuervorrichtung in der Höhe eines Lenksäulenoberteils liegt.

5. System gemäß einem der Ansprüche 1 bis 4, **dadurch gekennzeichnet, dass** die Steuerelemente sich in einem unter einem Lenkrad liegenden Raumbereich befinden.

6. System gemäß einem der Ansprüche 1 bis 5, **dadurch gekennzeichnet, dass** die erste Ebene des Raumes orthogonal zu einer das Lenkrad 1 enthaltenen Ebene ist.

7. System gemäß einem der Ansprüche 1 bis 6, **dadurch gekennzeichnet, dass** die Schaltsteuervorrichtung ein Getriebe steuert.
